Europäisches Patentamt

European Patent Office

Office européen des brevets

(19)

(11) EP 1 340 965 A1

(12) EUROPEAN PATENT APPLICATION

(43) Date of publication:
03.09.2003 Bulletin 2003/36

(51) Int Cl.$^7$: G01F 23/16, G01F 1/34, B67D 1/08

(21) Application number: 02251475.6

(22) Date of filing: 02.03.2002

(84) Designated Contracting States:
AT BE CH CY DE DK ES FI FR GB GR IE IT LI LU
MC NL PT SE TR
Designated Extension States:
AL LT LV MK RO SI

(71) Applicant: Linburn Technology Limited
Dunfermline, KY12 7DS (GB)

(72) Inventor: Mitchinson, James
Dunfermline (GB)

(74) Representative: Cooper, John et al
Murgitroyd & Company
165-169 Scotland Street
Glasgow G5 8PL (GB)

(54) **Methods and apparatus for measuring the contents of liquid containers and the flow rate of liquids dispensed from liquid containers and stock control systems based thereon**

(57) Methods and apparatus for measuring the volume and/or flow rate of liquid contained in a vessel of the type from which liquid is dispensed via a fluid path having one end submerged in the liquid and another end extending above the level of said liquid by a pressure difference DP between a pressure P2 above the liquid and a pressure P1 at a predetermined point in said fluid path. The volume of liquid is deduced from DP and the height H between the surface of said liquid and said predetermined point in said fluid path, by determining the depth D of said liquid from said height H, and determining the volume of said liquid from said depth D. The flow rate is deduced from a first value DP1 of DP under zero flow conditions and a second value DP2 when liquid is flowing through said fluid path and determining the flow rate Q of said liquid from the difference between DP2 and DP1. Flow rates may be time integrated in order to determine volumes dispensed from the vessel. The invention provides the basis for a variety of stock monitoring and yield analysis systems, devices and functions; e.g. in relation to beer kegs. Tapping heads for beer kegs or the like may incorporate pressure sensing ports and/or sensors/gauges for use in accordance with the invention.

Fig. 1

EP 1 340 965 A1

**Description**

The invention relates to methods and apparatus for measuring the quantity of liquid contained in a container of the type in which liquid is dispensed from the container by being drawn off through a conduit extending downwardly into the liquid from a point above the level of the surface of the liquid (i.e. the liquid is drawn off through the conduit by a difference in the pressure in the container above the liquid and the pressure in the conduit), and/or for measuring the flow rate of liquids dispensed from such containers. The invention is particularly applicable to beer kegs or the like, liquid storage tanks including underground storage tanks, liquid storage drums, etc. The invention further relates to stock monitoring and control systems based on such methods and apparatus.

In accordance with a first aspect of the invention, there is provided a method of measuring the volume of liquid contained in a vessel of the type in which liquid is dispensed from the vessel via a fluid path having an open lower end submerged in the liquid and an upper end extending out of the container above the level of said liquid by means of a pressure difference DP between a pressure P2 in the vessel above the liquid and a pressure P1 at a predetermined point in said fluid path, comprising the steps of determining the pressure difference DP, and determining the volume of said liquid from said pressure difference DP.

Preferably, the step of determining the volume of said liquid from said pressure difference DP comprises determining the height H between the surface of said liquid and said predetermined point in said fluid path, determining the depth D of said liquid from said height H, and determining the volume of said liquid from said depth D.

In accordance with a second aspect of the invention, there is provided a method of determining the rate of flow of a liquid through a fluid path from a vessel of the type in which liquid is dispensed from the vessel via said fluid path, said fluid path having an open lower end submerged in the liquid and an upper end extending out of the container above the level of said liquid by means of a pressure difference DP between a pressure P2 in the vessel above the liquid and a pressure P1 at a predetermined point in said fluid path, comprising the steps of determining a first value DP1 of the pressure difference DP under zero flow conditions and a second value DP2 of the pressure difference DP when liquid is flowing through said fluid, path and determining the flow rate Q of said liquid from the difference between said values DP2 and DP1.

In accordance with a third aspect of the invention, there is provided a method of monitoring the volume of liquid contained in and the volume of liquid dispensed from a vessel of the type in which liquid is dispensed from the vessel via a fluid path having an open lower end submerged in the liquid and an upper end extending out of the container above the level of said liquid by means of a pressure difference DP between a pressure P2 in the vessel above the liquid and a pressure P1 at a predetermined point in said fluid path, comprising the steps of:

> determining the pressure difference DP;
> determining the volume of said liquid contained in the vessel from said pressure difference DP; and
> determining the volume of liquid dispensed by determining a first value DP1 of the pressure difference DP under zero flow conditions and a second value DP2 of the pressure difference DP when liquid is flowing through said fluid path, determining the flow rate Q of said liquid from the difference between said values DP2 and DP1, and determining the volume dispensed by time integration of the flow rate.

In certain embodiments of the invention, the vessel is closed and the head space in the vessel above the liquid level is pressurised, the liquid being driven along the fluid path by the elevated pressure P2 in the head space. In these cases, it is preferred that the pressure difference DP is measured by means of a differential pressure transducer having a first side adapted to communicate with said fluid path and a second side adapted to communicate with the interior of said vessel above the level of said liquid.

In other embodiments of the invention, the interior of the vessel is at atmospheric pressure and the liquid is drawn through the fluid path by a reduced pressure downstream in the fluid path. In these cases, the pressure difference DP may be measured by measuring the gauge pressure in the fluid path.

In accordance with a fourth aspect of the invention, there is provided apparatus for performing a method in accordance with the first and/or second and/or third aspects of the invention, comprising pressure sensing means adapted for determining said pressure difference DP.

Preferably, said pressure sensing means comprises a differential pressure transducer having a first side adapted to communicate with said fluid path and a second side adapted to communicate with the interior of said vessel above the level of said liquid.

Where the interior of the vessel is at atmospheric pressure, said pressure sensing means may comprise a gauge pressure sensor arranged to measure the gauge pressure in the fluid path.

Preferably, the apparatus further includes data processing means adapted to receive pressure data defining said pressure difference DP and to calculate at least one of said liquid volume, said liquid flow rate and said dispensed liquid volume therefrom.

Preferably, said data processing means includes a store of vessel data whereby said liquid volume and/or said flow rate may be calculated from said pressure data.

Preferably, said data processing means is further adapted to perform time integration of flow rate data in order to determine a volume of liquid dispensed from said vessel.

In accordance with a fifth aspect of the invention, there is provided a stock monitoring system for monitoring the contents of at least one liquid vessel using the methods and/or apparatus in accordance with at least one of the first, second, third and fourth aspects of the invention.

In accordance with a sixth aspect of the invention, there is provided a tapping head for a pressurised liquid container, said tapping head having a first fluid conduit for forming part of a fluid dispense path for dispensing liquid from said container and a second fluid conduit for injecting pressurised gas into said container, a first pressure sensing port communicating with said first conduit and a second pressure sensing port communicating with said second conduit.

The tapping head may include at least one pressure sensor for generating signals representing either: (a) the pressure at said first pressure sensing port and the pressure at said second sensing port; or (b) the difference between the pressure at said first pressure sensing port and the pressure at said second sensing port.

In one embodiment, the tapping head includes a pressure gauge communicating with said first and second pressure sensing ports for measuring the difference between the pressure at said first pressure sensing port and the pressure at said second sensing port, and having a display calibrated to display the volume of the container contents as a function of said pressure difference.

In accordance with a seventh aspect of the invention, there is provided data processing apparatus adapted to receive pressure data and to determine liquid volumes and/or flow rates therefrom in accordance with at least one of the first, second and third aspects of the invention.

In accordance with an eighth aspect of the invention, there is provided a portable data logging device adapted to receive pressure data obtained in accordance with the method of the first aspect of the invention and further adapted for receiving data for determining the contents of partially used bottles.

The device may include a distance measuring device for measuring the depth of the contents of said bottles or a weight measuring device for measuring the weight of said bottles, and a barcode reader for reading barcodes from said bottles, and may be adapted to process said pressure data in order to determine the volume of the contents of a container in accordance with the first aspect of the invention and to correlate said depth or weight measurements with said barcodes so as to derive the current volume of the bottle contents using a store of data relating the depth of the contents or the weight of the bottle to volume for a variety of known types of bottle identified by their barcodes.

Embodiments of the invention will now be described, by way of example only, with reference to the accompanying drawings, in which:

    Fig. 1 is a schematic sectional view of a pressurised beer keg fitted with measuring apparatus in accordance with one embodiment of the present invention;

    Fig. 2 is a block diagram illustrating a beer stock monitoring system, employing the apparatus of Fig. 1, in accordance with one embodiment of a further aspect of the present invention; and

    Fig. 3 is a diagram illustrating an alternative embodiment of the invention in which the interior of a liquid container is at atmospheric pressure.

The invention will first be described by reference to embodiments thereof specifically concerned with measuring the contents of pressurised beer kegs. However, it will be understood that the invention is of wider application for measuring the contents of and flow rates from other types of liquid containers, as shall be described further below.

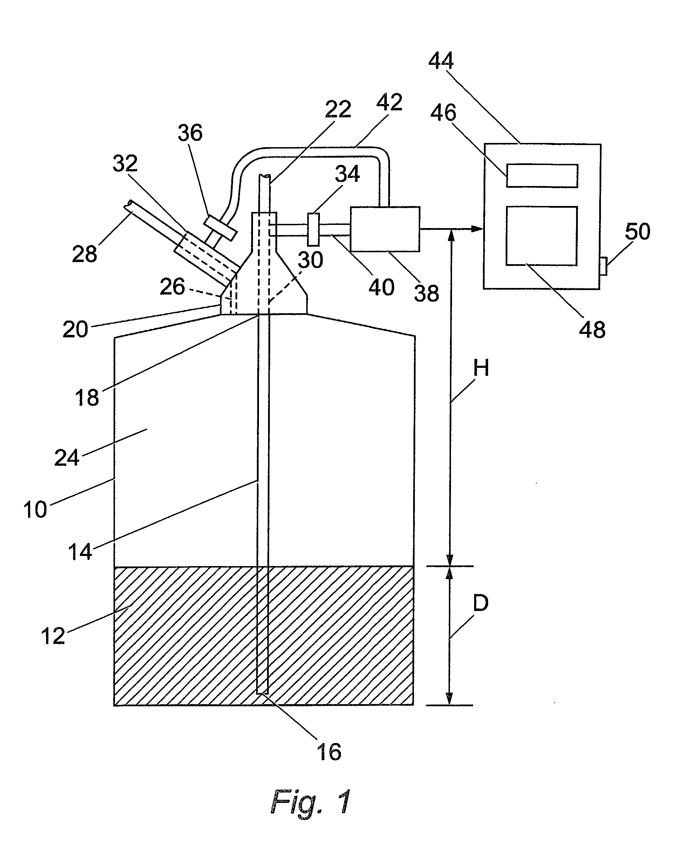

Referring now to Fig. 1, there is shown an example of a typical pressurised beer keg 10 containing a volume of beer 12. A tubular fluid conduit 14 known as a spear tube extends upwards from a free end 16 at a point close to the bottom of the interior volume of the keg 10 and has an upper end 18 connected to a tapping head 20 installed on the outlet of the keg 10. Via the tapping head 20, the spear tube 14 communicates with a beer line 22, which extends to a dispense point, typically a beer tap ("dispense valve") installed on a bar. The spear tube 14 and beer line 22 together constitute a dispense path from the keg to the dispense valve.

A head space 24 above the volume of beer 12 contains pressurised gas (the "driving gas", normally carbon dioxide or a mixture of carbon dioxide and nitrogen). The head space 24 is connected to a source of pressurised gas via a fluid passage 26 extending through the tapping head 20 and a gas line 28. The pressure in the head space 24 drives the beer out of the keg 10 through the spear tube 14 when the dispense valve is opened.

The present invention involves measuring the difference DP between the pressure P1 in the dispense path and the pressure P2 in the head space 24.

Firstly, this provides the basis for determining the depth D of the beer 12 in order to determine the volume of beer in the keg. DP varies substantially linearly with the height H above the surface of the beer volume 12 at which the pressure P1 is measured. Given knowledge of the relevant dimensions of the keg 10, or prior calibration, the depth D can thus be deduced and hence the volume V of the beer 24 contained in the keg 10, based on the pressure difference DP. For an accurate result, this requires substantially zero flow conditions in the dispense path and in the gas line 28.

Secondly, DP can be used to determine the rate of flow Q through the spear tube 14. As is known from the hydraulic flow formula for laminar flow in a fixed diameter conduit, during laminar flow the flow rate Q varies with the difference between the value of DP while the beer is flowing, DP2, and the value of DP under zero flow conditions, DP1, divided by the effective path length between the two points at which the pressure is measured, H in this example; i.e.:

$$Q \propto (DP2 - DP1) / H$$

Alternatively, where there is a significant discontinuity in the conduit diameter immediately upstream of the P1 sensing point:

$$Q \propto (DP2 - DP1)$$

Such a discontinuity may be deliberately included in the dispense path for the purposes of the present invention, or may exist in any case; e.g. as a result of a connection between two dissimilar conduits adjacent the P1 sensing point.

In either case, time integration of measured flow rates allows the volume of beer dispensed from the keg 10 to be monitored.

For the purposes of the present invention, the pressure P1 can be sensed at any suitable point in the dispense path provided that there are no one-way valves or the like between the pressure sensing point and the keg 10 which could affect the measured pressure. Similarly, the pressure P2 can be sensed at any point in the keg 10, tapping head 20 or gas line 28 where the pressure is equal to the pressure in the head space 24. Again, there should be no one-way valves or the like between the pressure sensing point and the head space 24.

In the present embodiment, P1 is measured at a point in a fluid passage 30 extending through the tapping head 20 and interconnecting the spear tube 14 and the beer line 22 and P2 is measured in a spigot 32 connecting the fluid passage 26 in the tapping head 20 to the gas line 28. Blocking valves 34 and 36 are fitted to the tapping head 20 and spigot 32 at the pressure sensing points, whereby pressure sensing means 38 may be removably connected to the pressure sensing points.

The pressure difference DP may be determined by means of any type of pressure sensors suited for measuring the relevant liquid and gas pressures P1 and P2. The pressures P1 and P2 could be measured independently and the value of DP calculated from the values of P1 and P2. Preferably, DP is measured by means of a differential pressure transducer 38 having one side connected to the P1 sensing point (in this embodiment, via a first conduit 40 and the first blocking valve 34) and its other side connected to the P2 sensing point (in this embodiment, via a second conduit 42 and the second blocking valve 36).

The arrangement of this embodiment utilises a modified tapping head having the blocking valves 34 and 36 fitted thereto in communication with the fluid passages 30 and 20, enabling the pressure sensing means 38 to be temporarily connected to the valves 34, 36 when required. Alternatively, pressure sensing means could be permanently installed in the tapping head, in which case the blocking valves 34, 36 are not required. Tapping heads may be purpose-made for the present invention or existing tapping heads may be modified for the purposes of the invention. For example, the pressure sensing points for P1 and P2 may be provided in pipe pieces which may be screwed into the tapping head and which are suitably machined to house one-way valves which are normally included in the beer port and gas line of a conventional tapping head (as noted above, the pressure sensing points would be located between the one-way valves and the keg).

Given the values of P1 and P2, or the value of DP obtained directly from a differential pressure transducer, the volume of the beer 12 contained in the keg and/or the flow rate of beer through the dispense path can be determined as explained above.

For the purposes of the present invention, the value of DP must be sufficient to drive the liquid in the keg 10 to the P1 pressure sensing point. For a beer keg, this implies a head space pressure P2 of at least 1 psi. This will almost always be the case in practice, since a head pressure greater than this will be required to drive the liquid to the dispense point.

The pressure data output from the pressure sensing means may be transmitted to any suitable type of data processing system in order to determine the volume of beer 12 and/or flow rate Q, via any suitable cabled or wireless connection. The data processing system to which the pressure data is transmitted includes container data (or "vessel data") relating to the specific keg type, either in the form of data describing the configuration of the keg, including the height H, or previously obtained calibration data, suitably in the form of a look-up table, from which the height D and hence the volume of beer may be calculated, and/or from which the flow rate Q may be calculated. If the system is required to deal with pressure data obtained from a variety of different keg types, then the system will include container data for each keg type and some means will also be required to identify the type of keg to which particular pressure data relates. This may be done in a variety of ways, either automatically or by means of manual user input.

In the example of Fig. 1, the pressure data output from the pressure sensing means 38 is input to a portable (preferably hand-held) electronic data logging unit 44, typically having a display 46, keypad or the like 48 and output port 50, and including the relevant container data. The unit is adapted to calculate, log and display the volume and/or flow rate calculated from the pressure data. If required, these may be transmitted via the output port 50, via any suitable cabled or wireless connection, to a further data processing system or network, as shall be described further below.

In a simple form, as described above and illustrated in Fig. 1, the invention may be used simply to provide measurements of liquid volumes and/or flow rates, which can be used locally for stock monitoring/control purposes. Alternatively, the invention may provide the basis for, or be integrated into, a more sophisticated stock/monitoring system, either locally or on a wide area basis.

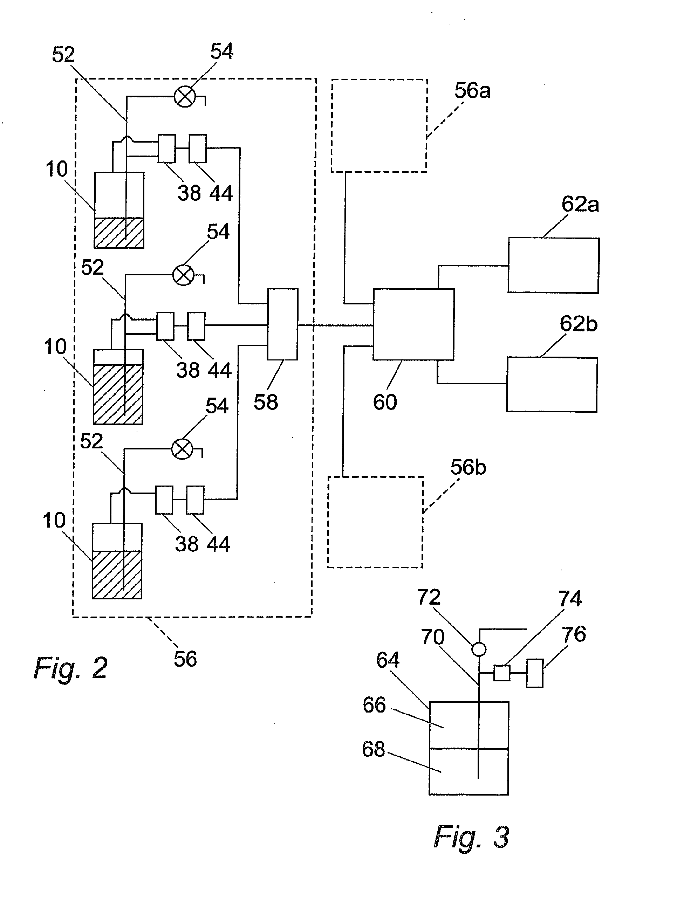

An example of such a system is illustrated in Fig. 2, which shows a plurality of kegs 10, each having a dispense path 52 to a dispense valve 54, and each having pressure sensing means 38 and local data logging unit 44 as described in relation to Fig. 1, all located in a public house or other licensed premises or the like, indicated by broken line 56. Each of the kegs 10 would have a gas line 28 as in Fig. 1. These have been omitted from Fig. 2 for simplicity. A local data network connects the units 44 to a local host data processing system 58. It will be understood that a system of this type could be arranged in a number of ways. A pressure sensing means 38 and unit 44 could be connected temporarily to each keg as and when required and collected data downloaded to the local host 58. Alternatively, each keg (or tapping head associated with a keg) could be permanently fitted with pressure sensing means 38 and a unit 44, or the pressure sensing means could communicate directly with the local host 58, which would take over the functionality of the units 44.

In any case, the host 58 receives and processes information which allows monitoring of the volume of liquid in the kegs 10 and/or, from the flow rate Q, the volume of liquid dispensed from the kegs 10, together with deliveries of new stock. This information provides the basis for sophisticated stock control functions; for example, facilitating and optimising the re-ordering of stock from an external supplier, and reconciling remaining stock with quantities dispensed and sales records.

The system described thus far may operate as a local stand-alone system. Alternatively, a local system of this type could be connected to a wide area networked system serving a number of different premises such as 56a, 56b, each having a local system similar to that described above. The local host 58 of each or the premises 56, 56a, 56b may be connected by any suitable wide area network channels to a network host 60, providing a central stock monitoring/control system for any number of different premises. The processing of the pressure data may be performed locally or centrally. In the latter case, the local host 58 may serve simply as a communications interface between the pressure sensing means 38 and the network host 60.

The network may be extended to communicate directly with a number of suppliers such as 62a and 62b, further automating or streamlining the ordering and delivery of new stock (alternatively, local hosts 58 could communicate directly with suppliers 62a, 62b without an intermediate network host 60).

Systems of these types provide improved stock monitoring/control functions without local intervention and with no need for stock taking to be performed manually by local staff.

The ability to measure the flow rate from the kegs 10 also provides the basis for automatic control of beer dispense, particularly when combined with a load cell measurement system at the point of dispense for determining the volume of beer dispensed into a glass, such as is described in copending British Patent Applications Nos. 9920822.5 and 0001497.7.

The invention has been described thus far specifically in relation to pressurised beer kegs in a licensed trade environment. The invention is also applicable to other types of liquid containers from which liquid is dispensed via a conduit extending downwards into the liquid from a point above the liquid level. This includes other types of container in which liquid is dispensed through the conduit by an elevated pressure in the head space above the liquid in the container, and types of container in which liquid is dispensed by means of a pressure difference DP generated by other means, such as a vacuum pump in the dispense path. An example of this is illustrated in Fig. 3, which shows a liquid container 64, in which the head space 66 is open to ambient/atmospheric pressure and liquid 68 in the container 64 is drawn through a fluid path 70 by means of a vacuum pump 72. In such cases, the pressure difference DP may be measured simply by measuring the gauge pressure in the fluid path 70, upstream of the pump 72, using a gauge pressure sensor 74 which has an output connected to any suitable data processing means 76.

Specific examples of such other types of containers include underground fuel storage tanks in petrol stations and drums for storing any of a variety of liquid chemical products. Various arrangements for local and remote data processing and related systems may be applied in such cases in a similar manner to those described in relation to Figs. 1 and 2 for beer kegs.

In any of these possible applications, the invention also allows the checking of the volume of full containers provided that liquid is bled through the conduit/dispense path to a point higher than the P1 pressure sensing point.

The data processing means such as 44 and/or 58 and/or 60 which interprets the pressure data from the pressure sensing means may be connected to any suitable type of alarm, indicator or automatic container changeover system. This allows empty containers to be swapped for fresh, full containers in a controlled and better managed manner.

The measurement instrumentation required by the present invention has no moving parts and provides results without the need to untap and retap the keg or other container.

Where a differential pressure transducer is used as the pressure sensing means, this is preferably located close to and with a fixed relative orientation to the P1 pressure sensing point in the dispense path. The pressure sensing means is preferably suited for wet operation, at least in relation to the higher pressure P2 sensing point. Alternatively, a sensor suited for dry operation may used provided it is arranged that the higher pressure sensing point is higher than the P1 pressure sensing point so that a small air cushion is established between the sensor and the monitoring point.

Other possible features uses and advantages of the present invention will now be discussed.

(A) A tapping head in accordance with the invention may be provided with an integrated pressure gauge calibrated to provide a direct display of the of the contents of the vessel. The gauge may be of any suitable type (e.g. a mechanical or electrical analog device, such as an aneroid type), connected to the pressure sensing points of the tapping head, and may have different scales for different standard vessel types (e.g. standard beer keg sizes).

(B) A portable (handheld) data logging/processing device such as 44 in Fig. 1 may also incorporate means for measuring/logging the contents of "broken stock" such as partially used liquor bottles in a licensed trade environment, and/or other stock monitoring functions. WO00/19165 (the entire content of which is incorporated herein by reference) describes devices and systems for monitoring broken stock, by measuring the depth of the bottle contents using a roller-type sensor and correlating this with a barcode read from the bottle in order to derive the current volume of the bottle contents (using a store of data relating the depth of the contents to volume for a variety of known types of bottle identified by their barcodes). A hand-held broken-stock monitor of the type described in WO00/19165 could be adapted to receive, log and/or process pressure readings in accordance with the present invention, thereby providing a complete stock monitoring system for bottled and draught liquor in a single portable device. Such a device could monitor broken stock by means other than those disclosed in WO00/19165; e.g. by other distance measuring means or by weighing bottles and deriving the volume of the bottle contents from the weight thereof.

(C) A system employing the present invention to provide continuous vessel content and flow rate measurement enables the system to be "self-calibrating" in a manner that enhances the accuracy of the data provided by the system. The system software can be adapted to correlate vessel content measurements obtained using the first aspect of the invention with "dispense volumes" obtained by time integration of flow rates obtained using the second aspect of the invention. This data can also be correlated with the known volume of the contents of vessel when it is full (in the case of beer kegs, for example, the content of a full keg is known can be assumed to be accurate). It is easy for the software to identify a new, full vessel and an empty vessel from characteristic changes in pressure when a full vessel is connected and when the vessel becomes empty. The relative accuracies of the vessel content and dispense volume measurements vary with the vessel content and can be reconciled against one another, using the known "full vessel" content and the empty vessel as reference points.

(D) A system employing the present invention to provide continuous vessel content and flow rate measurement together with sales data from an electronic till or the like also enables sophisticated yield analysis functions. For example, in a licensed trade environment, the "sales yield" may be defined as the number of units (e.g. pints) sold, as determined from till records, divided by the number of pints dispensed, as determined from the flow rate data. The "dispense yield" may be defined as the number of pints dispensed divided by the number of units consumed (from the keg), as determined from the keg content data. The "gross yield" may be defined as the number of units sold divided by the number of units consumed (equal to the sales yield multiplied by the dispense yield). Analysis of these different yield measurements allows anomalies to be identified. For example, if the number of units "sold" is lower than the number of units "dispensed", this implies units being dispensed without being paid for. If the number of units "sold" is greater than the number of units "consumed", this implies short measures being served to customers.

Improvements and modifications may be incorporated without departing from the scope of the invention.

## Claims

1. A method of measuring the volume of liquid contained in a vessel of the type in which liquid is dispensed from the vessel via a fluid path having an open lower end submerged in the liquid and an upper end extending out of the container above the level of said liquid by means of a pressure difference DP between a pressure P2 in the vessel above the liquid and a pressure P1 of liquid at a predetermined point in said fluid path, comprising the steps of determining the pressure difference DP, and determining the volume of said liquid from said pressure difference DP.

2. A method as claimed in Claim 1, wherein the step of determining the volume of said liquid from said pressure difference DP comprises determining the height H between the surface of said liquid and said predetermined point in said fluid path, determining the depth D of said liquid from said height H, and determining the volume of said liquid from said depth D.

3. A method of determining the rate of flow of a liquid through a fluid path from a vessel of the type in which liquid is dispensed from the vessel via said fluid path, said fluid path having an open lower end submerged in the liquid and an upper end extending out of the container above the level of said liquid by means of a pressure difference DP between a pressure P2 in the vessel above the liquid and a pressure P1 of liquid at a predetermined point in said fluid path, comprising the steps of determining a first value DP1 of the pressure difference DP under zero flow conditions and a second value DP2 of the pressure difference DP when liquid is flowing through said fluid path and determining the flow rate Q of said liquid from the difference between said values DP2 and DP1.

4. A method of monitoring the volume of liquid contained in and the volume of liquid dispensed from a vessel of the type in which liquid is dispensed from the vessel via a fluid path having an open lower end submerged in the liquid and an upper end extending out of the container above the level of said liquid by means of a pressure difference DP between a pressure P2 in the vessel above the liquid and a pressure P1 of liquid at a predetermined point in said fluid path, comprising the steps of:

   determining the pressure difference DP;
   determining the volume of said liquid contained in the vessel from said pressure difference DP; and
   determining the volume of liquid dispensed by determining a first value DP1 of the pressure difference DP under zero flow conditions and a second value DP2 of the pressure difference DP when liquid is flowing through said fluid path, determining the flow rate Q of said liquid from the difference between said values DP2 and DP1, and determining the volume dispensed by time integration of the flow rate.

5. A method as claimed in any one of Claims 1 to 4, wherein the vessel is closed and the head space in the vessel above the liquid level is pressurised, the liquid being driven along the fluid path by the elevated pressure P2 in the head space.

6. A method as claimed in Claim 5, wherein the pressure difference DP is measured by means of a differential pressure transducer having a first side adapted to communicate with said fluid path and a second side adapted to communicate with the interior of said vessel above the level of said liquid.

7. A method as claimed in any one of Claims 1 to 4, wherein the interior of the vessel is at atmospheric pressure and the liquid is drawn through the fluid path by a reduced pressure downstream in the fluid path.

8. A method as claimed in Claim 7, wherein the pressure difference DP is measured by measuring the gauge pressure in the fluid path.

9. Apparatus for performing a method in accordance with any preceding Claim, comprising at least one pressure sensor adapted for determining said pressure difference DP.

10. Apparatus as claimed in Claim 9, wherein said pressure sensor comprises a differential pressure transducer having a first side adapted to communicate with said fluid path and a second side adapted to communicate with the interior of said vessel above the level of said liquid.

11. Apparatus as claimed in Claim 9, for use where the interior of the vessel is at atmospheric pressure, said pressure sensing means comprising a gauge pressure sensor arranged to measure the gauge pressure of liquid in in the fluid path.

12. Apparatus as claimed in any one of Claims 9 to 11, further including data processing means adapted to receive pressure data defining said pressure difference DP and to calculate at least one of said liquid volume, said liquid flow rate and said dispensed liquid volume therefrom.

13. Apparatus as claimed in Claim 12, wherein said data processing means includes a store of vessel data whereby said liquid volume and/or said flow rate may be calculated from said pressure data.

14. Apparatus as claimed in Claim 12 or Claim 13, wherein said data processing means is further adapted to perform time integration of flow rate data in order to determine a volume of liquid dispensed from said vessel.

15. A stock monitoring system for monitoring the contents of at least one liquid vessel using the methods and/or apparatus in accordance with any preceding Claim.

**16.** A tapping head for a pressurised liquid container, said tapping head having a first fluid conduit for forming part of a fluid dispense path for dispensing liquid from said container and a second fluid conduit for injecting pressurised gas into said container, a first pressure sensing port communicating with said first conduit and a second pressure sensing port communicating with said second conduit.

**17.** A tapping head for a pressurised liquid container as claimed in claim 16, including at least one pressure sensor for generating signals representing one of: (a) the pressure at said first pressure sensing port and the pressure at said second sensing port; or (b) the difference between the pressure at said first pressure sensing port and the pressure at said second sensing port.

**18.** A tapping head for a pressurised liquid container as claimed in claim 16, including a pressure gauge communicating with said first and second pressure sensing ports for measuring the difference between the pressure at said first pressure sensing port and the pressure at said second sensing port, and having a display calibrated to display the volume of the container contents as a function of said pressure difference.

**19.** Data processing apparatus adapted to receive pressure data and to determine liquid volumes and/ or flow rates therefrom in accordance with any one of Claims 1 to 8.

**20.** A portable data logging device adapted to receive pressure data obtained in accordance with the method of any of claims 1 to 8 and further adapted for receiving data for determining the contents of partially used bottles.

**21.** A device as claimed in claim 20, including a distance measuring device for measuring the depth of the contents of said bottles.

**22.** A device as claimed in claim 20, including a weight measuring device for measuring the weight of said bottles and their contents.

**23.** A device as claimed in any of claims 20 to 22, including a barcode reader for reading barcodes from said bottles.

**24.** A device as claimed in claim 23, adapted to process said pressure data in order to determine the volume of the contents of a container in accordance with claim 1 and to correlate said depth or weight measurements with said barcodes so as to derive the current volume of the bottle contents using a store of data relating the depth of the contents or the weight of the bottle to volume for a variety of known types of bottle identified by their barcodes.

Fig. 1

Fig. 2

Fig. 3

| | EUROPEAN SEARCH REPORT | | Application Number |
|---|---|---|---|
| | European Patent Office | | EP 02 25 1475 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 223 848 A (WHITBREAD & COMPANY LIMITED) 3 March 1971 (1971-03-03) | 1,2,5,6, 9,10,12, 15-19 | G01F23/16 G01F1/34 B67D1/08 |
| Y | * page 1, left-hand column, line 35 - page 1, right-hand column, line 67; page 3, left-hand column, line 3 - page 3, right-hand column, line 128; figure 1 * | 3,7,8, 11-14, 20,22-24 | |
| X | GB 2 077 432 A (DISTILLERS CO CARBON DIOXIDE) 16 December 1981 (1981-12-16) * page 2, left-hand column, line 41 - page 3, left-hand column, line 27; figures 1,2 * | 1,2,5,6, 9,10, 15-17,19 | |
| X | GB 1 577 499 A (DISTILLERS CO YEAST LTD) 22 October 1980 (1980-10-22) * page 2, left-hand column, line 18-47; page 2, right-hand column, line 111-page 3, left-hand column, line 3; page 3, right-hand column, line 122 - page 4, left-hand column, line 10, figure * | 1,2,5,6, 9,10, 15-17 | TECHNICAL FIELDS SEARCHED (Int.Cl.7) G01F B67D |
| E | GB 2 367 625 A (LINBURN TECHNOLOGY LTD) 10 April 2002 (2002-04-10) * the whole document * | 1-20,22 | |
| Y | EP 0 414 156 A (CONTROL TECH) 27 February 1991 (1991-02-27) | 3,12-14 | |
| A | * column 2, line 10-50; column 3, line 53 - column 4, line 32; column 8, line 2 - column 9, line 29; figure 4 * | 4 | |
| | -/-- | | |

The present search report has been drawn up for all claims

| Place of search | Date of completion of the search | Examiner |
|---|---|---|
| THE HAGUE | 19 July 2002 | Rose, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 25 1475

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|----------|---|---|---|
| Y | GB 2 259 147 A (BURRENG LIMITED ;PREMIERFORCE LIMITED (GB)) 3 March 1993 (1993-03-03) * page 4, line 1 - page 5, line 4 * --- | 7,8,11 | |
| Y | WO 98 01726 A (WILLIS WILLIAM GORDON) 15 January 1998 (1998-01-15) * page 4, line 6 - page 6, line 12; claim 1; figure 1 * --- | 20,22-24 | |
| A | US 5 511 694 A (ROHM EDWARD J) 30 April 1996 (1996-04-30) * column 1, line 49 - column 2, line 30; column 4, line 64 - column 5, line 19 * ----- | 3 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 19 July 2002 | Rose, A |

EPO FORM 1503 03.82 (P04C01)

**ANNEX TO THE EUROPEAN SEARCH REPORT
ON EUROPEAN PATENT APPLICATION NO.**     EP 02 25 1475

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2002

| Patent document cited in search report | | Publication date | Patent family member(s) | | Publication date |
|---|---|---|---|---|---|
| GB 1223848 | A | 03-03-1971 | NONE | | |
| GB 2077432 | A | 16-12-1981 | NONE | | |
| GB 1577499 | A | 22-10-1980 | NONE | | |
| GB 2367625 | A | 10-04-2002 | NONE | | |
| EP 0414156 | A | 27-02-1991 | US 5022557 A | | 11-06-1991 |
| | | | AU 639250 B2 | | 22-07-1993 |
| | | | AU 6111690 A | | 21-02-1991 |
| | | | CA 2021636 A1 | | 21-02-1991 |
| | | | EP 0414156 A2 | | 27-02-1991 |
| | | | JP 3187900 A | | 15-08-1991 |
| GB 2259147 | A | 03-03-1993 | GB 2259157 A | | 03-03-1993 |
| WO 9801726 | A | 15-01-1998 | AU 3451697 A | | 02-02-1998 |
| | | | EP 1009978 A1 | | 21-06-2000 |
| | | | WO 9801726 A1 | | 15-01-1998 |
| US 5511694 | A | 30-04-1996 | NONE | | |

EPO FORM P0459

For more details about this annex : see Official Journal of the European Patent Office, No. 12/82